# EUROPEAN PATENT APPLICATION

(11) **EP 1 020 750 A2**
(43) Date of publication of application: **19.07.2000**
(21) Application number: 00100156.9
(22) Date of filing: 11.01.2000
(51) Int. Cl.: G02B 6/44

(54) **Tension member-holder of overhead optical cable**

(30) Priority: 11.01.1999 JP 460399
(71) Applicant: NEC CORPORATION, Tokyo (JP)
(72) Inventor: Moribe, Makoto, Minato-ku, Tokyo (JP); Goto, Hironobu, Minato-ku, Tokyo (JP); Sato, Koji, Minato-ku, Tokyo (JP); Matumoto, O, Minato-ku, Tokyo (JP)
(74) Representative: VOSSIUS & PARTNER

(57) **Abstract**

It is an object of an invention to provide a tension member-holder in which tension members are fitted to their right places easily and certainly. The tension members pass through slits formed on tension member-holding units, and are supported by tension member-supporting channels. Thereafter, the tension members are fixed to the tension member-supporting channels by fixing screws.

## Description

The invention relates to a tension member-holder suited for a work for fitting tension members of an overhead optical cable in their right places.

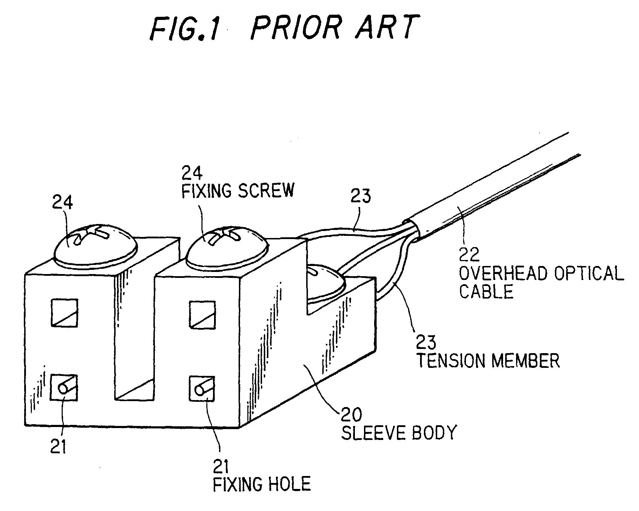

Heretofore, a fixing sleeve shown in Fig. 1 has been used in case that tension members of an overhead optical cable is fixed.

That is to say, a sleeve body 20 of a fixing sleeve is provided with fixing holes 21 and fixing screws 24. In case that the tension members 23 of the overhead optical cable are fixed to the sleeve body 20, the tension members 23 are made to pass through the fixing holes 21, and the fixing screws 24 are driven.

However, in the aforementioned conventional fixing sleeve, it is necessary to make the tension members 23 pass through the fixing holes 21 in case that the tension members 23 are fixed to the sleeve body 20. Accordingly, there arises a problem that a work for making the tension members 23 pass through the fixing holes 21 is complicated.

Accordingly, it is an object of the invention to provide a tension member-holder in which a work for fitting the tension members in their right places can be performed easily and certainly.

According to a feature of the invention, a tension member-holder for fixing one or more tension members of an overhead optical cable comprising one or more tension member-holding units, each of which comprises:
a slit formed thereon in a longitudinal direction, the tension member passing through the slit,
a tension member-supporting channel communicated with the slit, and
a fixing screw for fixing the tension member to the tension member-supporting channel.

A cross-section of a tension member-supporting channel may be triangular.

A cross-section of a tension member-supporting channel may be rounded.

A width of a slit is slightly smaller than a diameter of a tension member.

A lower part of a cross-section of a periphery of a slit may be rounded.

A lower part of a cross-section of a periphery of a slit may be tapered.

An upper part of a cross-section of a periphery of a slit may be rounded.

An upper part of a cross-section of a periphery of a slit may be tapered.

In a tension member-holder according to the invention, tension members are made to pass through slits respectively excised on tension member-holding units in a longitudinal direction, and supported by tension member-holding channels.

The invention will be explained in more detail in conjunction with the appended drawings, wherein:
Fig. 1 is a perspective view for showing a conventional fixing sleeve;
Fig. 2 is a perspective view for showing a tension member-holder according to the first preferred embodiment of the invention;
Fig. 3 is an enlarged perspective view for showing the tension member-holder shown in Fig. 2;
Fig. 4 is a cross-sectional view showing an important portion of the tension member-holder shown in Fig. 3;
Fig. 5 is a perspective view for explaining a method for holding a tension member by means of a tension member-holder shown in Fig. 2;
Fig. 6 is a cross-sectional view for showing the second preferred embodiment of the invention in which a cross-section of a tension member-holding channel shown in Fig. 4 is changed;
Fig. 7 is a cross-sectional view for showing the third preferred embodiment of the invention in which a cross-section of a tension member-holding channel shown in Fig. 4 is changed;
Fig. 8 is a cross-sectional view for showing the fourth preferred embodiment of the invention in which a cross-section of a periphery of a slit shown in Fig. 4 is changed;
Fig. 9 is a cross-sectional view for showing the fifth preferred embodiment of the invention in which a cross-section of a periphery of a slit shown in Fig. 5 is changed;
Fig. 10 is a cross-sectional view for showing the sixth preferred embodiment of the invention in which a cross-section of a periphery of a slit shown in Fig. 9 is changed;
Fig. 11 is a cross-sectional view for showing the seventh preferred embodiment of the invention in which a cross-section of a periphery of a slit shown in Fig. 9 is changed; and
Fig. 12 is a cross-sectional view for showing the eighth preferred embodiment of the invention in which a cross-section of a periphery of a slit shown in Fig. 10 is changed.

Thereafter, preferred embodiments of the invention will be explained.

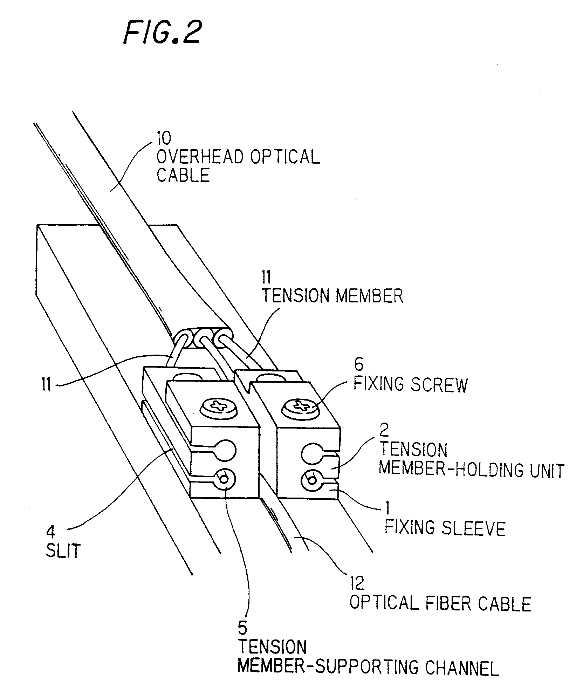

Fig. 2 is a perspective view for showing a tension member-holder according to the first preferred embodiment.

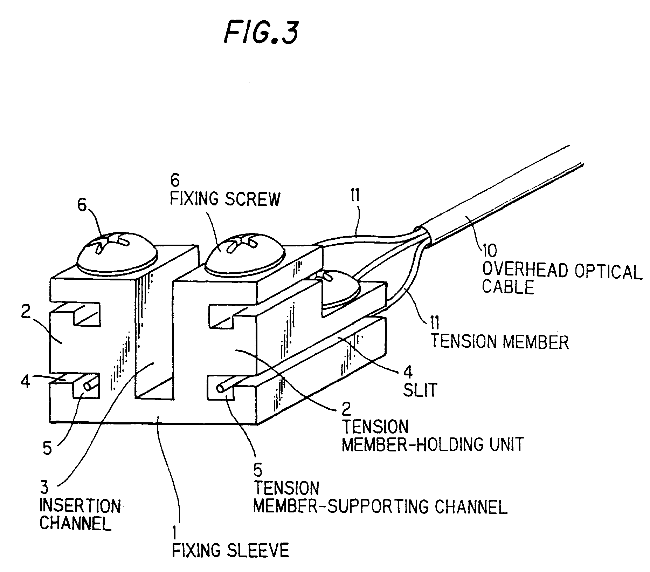

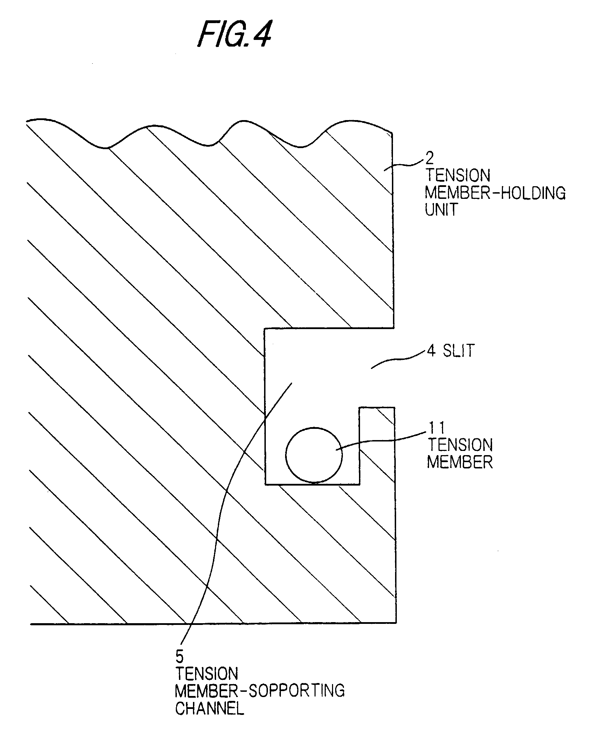

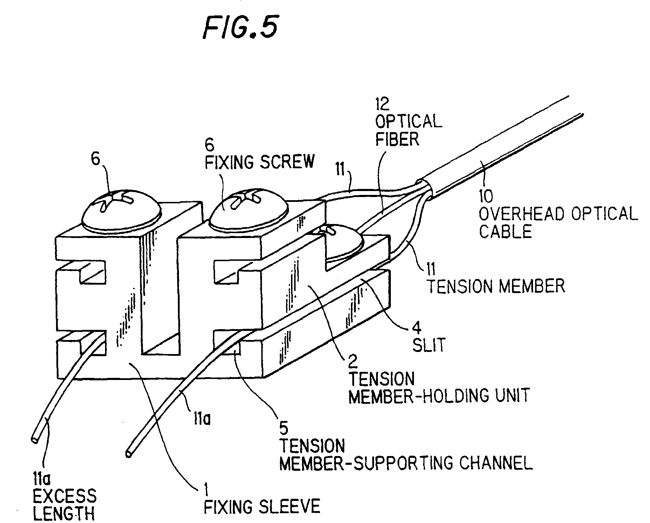

Fig. 3 is an enlarged perspective view for showing the tension member-holder shown in Fig. 2. Fig. 4 is a cross sectional view for showing an important part of the tension member-holder shown in Fig. 3, and Fig. 5 is a perspective view for explaining a method for holding the tension member by means of the tension member-holder shown in Fig. 2.

A fixing sleeve 1 serving as a key part of the tension member-holder shown in Figs. 2 to 4 is provided with two tension member-holding units 2. Moreover, an insertion channel 3 is provided between the adjacent tension member-holding units 2, and an optical fiber cable 12 is inserted into the insertion channel 3.

The tension member-holding unit 2 is provided with a slit 4 excised in a longitudinal direction on the fixing sleeve 1 and a tension member-supporting channel 5.

When the tension member 11 of the overhead optical cable 10 passes through the slit 4 and is supported by the tension member-supporting channel 5, the tension member 11 is fixed by a fixing screw 6.

Next, a method for holding the tension member 3 by means of the tension member-holder mentioned in the above will be explained referring to Fig. 5.

The optical fiber 12 and the tension members 11 are taken out from the overhead optical cable 10 in the first place. Next, the tension members 11 are made to pass through the slits 4 of the tension member-holding units 2 and supported by the tension member-supporting channels 5.

In the case, since the tension members 11 can pass through the slits 4 in condition that the overhead optical cable 10 has excess lengths 11a of the tension members 11, the tension members 11 can be easily fitted to the tension member-holding channels 5.

After the tension members 11 are fitted to the tension member-holding channels 5, the tension members 11 are fixed to the tension member-holding units 2 of the fixing sleeve 1 by driving the fixing screw 6.

After the tension members 11 are fixed, the excess lengths 11a of the tension members 11 are cut, and the work for holding the tension members 11 is over.

As mentioned in the above, in the first preferred embodiment, since the tension members 11 are supported by the tension member-supporting channels 5 after the tension members 11 have passed through the slits 4 formed on the tension member holding-units 2 of the fixing sleeve 1 in the longitudinal direction, the work for fitting the tension members 11 in their right places can be performed easily and certainly.

Moreover, since the work for fitting the tension members 11 in their right places is easy, the time necessary for the work can be sharply shortened.

### (The second preferred embodiment)

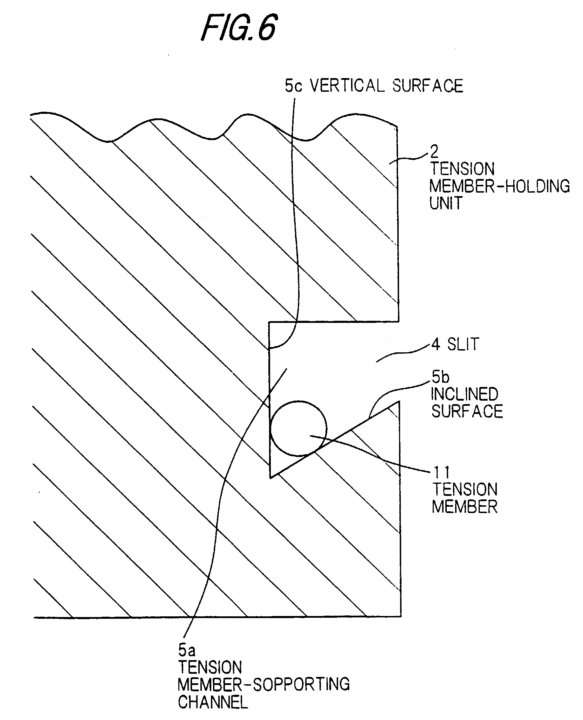

Fig. 6 is a cross-sectional view for showing the second preferred embodiment of the invention in which the shape of the cross-section of the tension member-supporting channel 5 shown in Fig. 4 is changed.

In the second preferred embodiment, the cross-section of the tension member-supporting channel 5a is triangular.

In this case, since the tension member 11 which has passed through the slit 4 is supported by an inclined surface 5b and a vertical surface 5c, the tension member-supporting channel 5a can be made small-sized.

### (The third preferred embodiment)

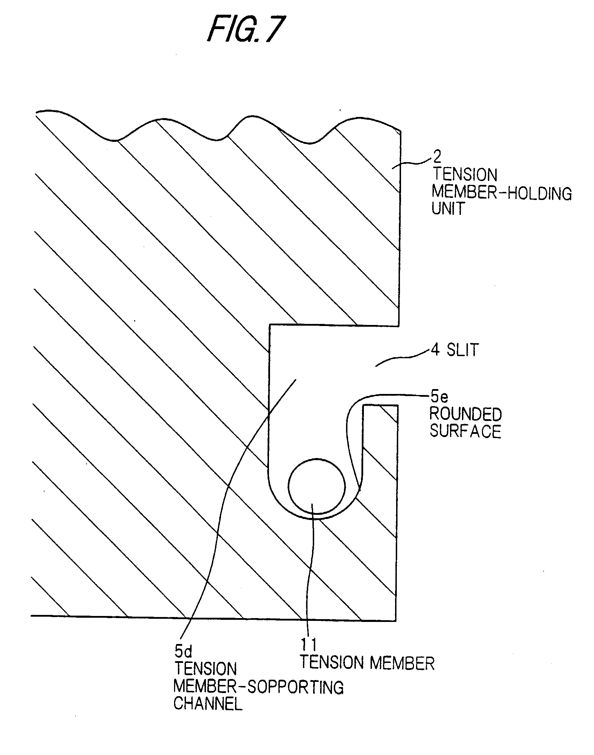

Fig. 7 is a cross-sectional view for showing the third preferred embodiment of the invention in which the shape of the cross-section of the tension member-supporting channel 5 shown in Fig. 4 is changed.

In the third preferred embodiment, the cross-section of the tension member-supporting channel 5d is rounded.

In this case, since the tension member 11 which has passed through the slit 4 can be stably supported by a rounded surface 5e.

### (The fourth preferred embodiment)

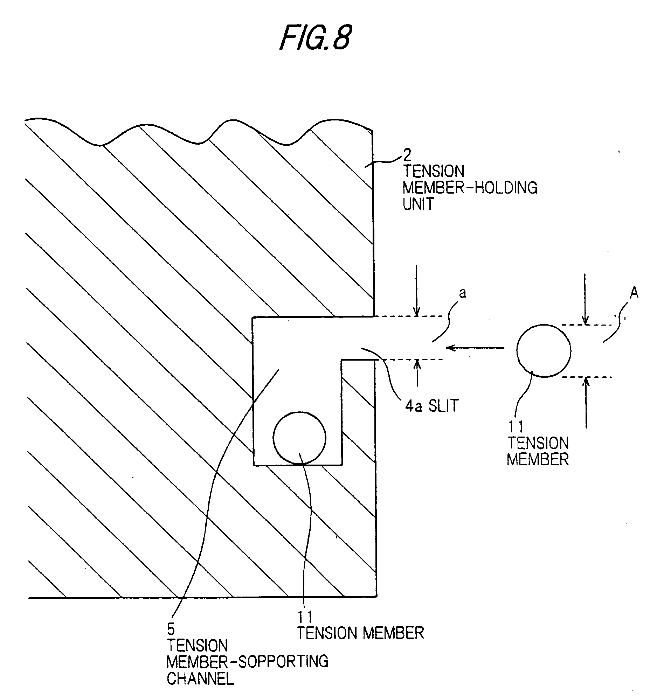

Fig. 8 is a cross-sectional view for showing the fourth preferred embodiment of the invention in which a shape of a cross-section of the periphery of the slit 4 shown in Fig. 4 is changed.

In the fourth preferred embodiment, a width a of the slit 4a is slightly smaller than a diameter A of the tension member 11.

In this case, since the width a of the slit 4a is slightly smaller than the diameter A of the tension member 11, the tension member 11 supported by the tension member-supporting channel 5 can be prevented from falling off.

### (The fifth preferred embodiment)

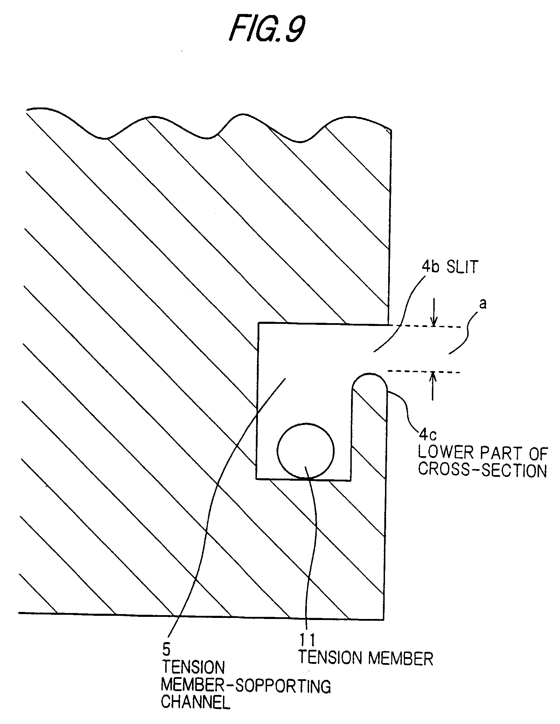

Fig. 9 is a cross-sectional view for showing the fifth preferred embodiment of the invention in which the shape of the cross-section of the periphery of the slit 4a shown in Fig. 8 is changed.

In the fifth preferred embodiment, a width a of the slit 4b is slightly smaller than a diameter A of the tension member 11 similarly to the fourth preferred embodiment.

Moreover, a lower part 4c of the cross-section of the periphery of the slit 4b is rounded.

In this case, since the lower part 4c of the cross-section of the periphery of the slit 4b is rounded, the tension member 11 can easily pass through the slit 4b is addition to the effect of the fourth preferred embodiment.

### (The sixth preferred embodiment)

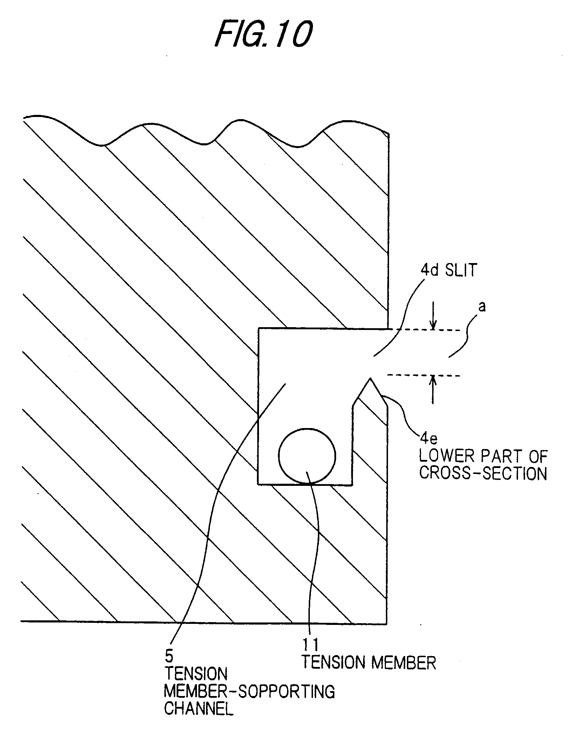

Fig. 10 is a cross-sectional view for showing the sixth preferred embodiment of the invention in which the shape of the cross-section of the periphery of the slit 4b in Fig. 9 is changed.

In the sixth preferred embodiment, a width a of a slit 4d is slightly smaller than the diameter A of the tension member 11 similarly to the fifth preferred embodiment.

Moreover, a lower part 4e of the cross-section of the periphery of the slit 4d is tapered.

In this case, since the lower part 4e of the cross section of the periphery of the slit 4d is tapered, the tension member 11 can easily pass through the slit 4d similarly to the effect of the fifth preferred embodiment.

### (The seventh preferred embodiment)

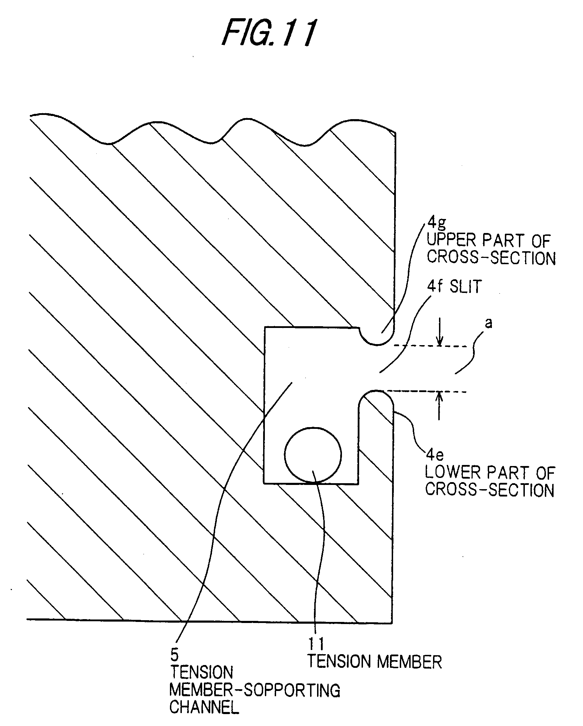

Fig. 11 shows the seventh preferred embodiment of the invention in which the shape of the cross-section of the periphery of the slit 4b in Fig. 9 is changed.

In the seventh preferred embodiment, a width a of a slit 4f is slightly smaller than the diameter A of the tension member 11 similarly to the fifth preferred embodiment.

Moreover, an upper part 4g of a cross-section of the periphery of the slit 4f is rounded similarly to the lower part 4e of the same.

In this case, since both the upper and lower parts 4g and 4e of the cross-section of the periphery of the slit 4f are rounded in addition to the effect of the fifth preferred embodiment, the tension member 11 can pass through the slit 4f more easily.

### (The eighth preferred embodiment)

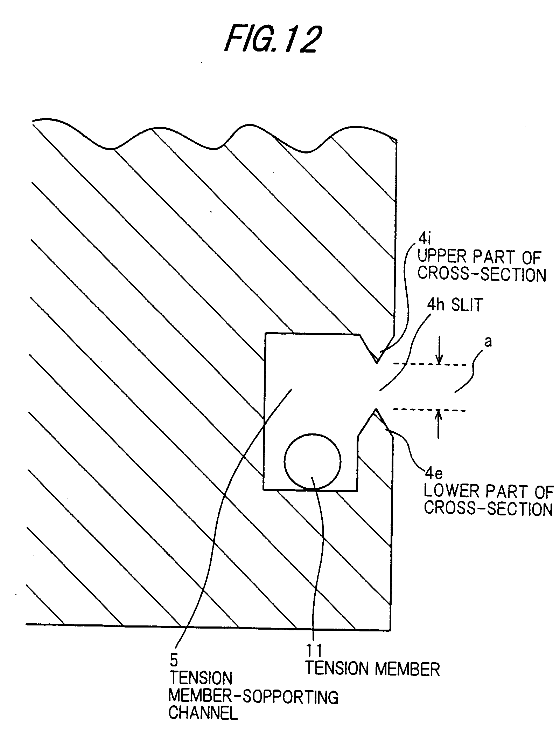

Fig. 12 is a cross-sectional view for showing the eighth preferred embodiment of the invention in which the shape of the cross-section of the periphery of the slit 4d in Fig. 10 is changed.

In the eighth preferred embodiment, a width a of a slit 4h is slightly smaller than the diameter A of the tension member 11.

Moreover, an upper part 4i of the cross-section of the periphery of the slit 4h is tapered similarly to the lower part 4e of the same.

In this case, since both the upper and lower parts 4i and 4e of the cross-section of the periphery of the slit 4h are tapered in addition to the effect of the sixth preferred embodiment, the tension member 11 can pass through the slit 4h more easily.

As mentioned in the above, according to the tension member-holder according to the invention, since the tension members are made to pass through slits respectively excised on the tension member-holding units in the longitudinal direction and supported by the tension member-holding channels, the work for fitting the tension members in their right places can be performed easily and certainly.

Although the invention has been described in detail with particular reference to preferred embodiments, but it will be understood that variations and modifications can be effected within the scope of the invention as set forth in the appended claims.

## Claims

1. A tension member-holder for fixing one or more tension members of an overhead optical cable comprising one or more tension member-holding units, each of which comprises:
a slit formed thereon in a longitudinal direction, said tension member passing through said slit,
a tension member-supporting channel communicated with said slit, and
a fixing screw for fixing said tension member to said tension member-supporting channel.

2. A tension member-holder defined as claim 1, wherein:
a cross-section of said tension member-supporting channel is triangular.

3. A tension member-holder defined as claim 1, wherein:
a cross-section of said tension member-supporting channel is rounded.

4. The tension member-holder as defined in any of claims 1 to 3, wherein:
a width of said slit is slightly smaller than a diameter of said tension member.

5. The tension member-holder as defined in any of claims 1 to 4, wherein:
a lower part of a cross-section of a periphery of said slit is rounded.

6. The tension member-holder as defined in any of claims 1 to 4, wherein:
a lower part of a cross-section of a periphery of said slit is tapered.

7. The tension member-holder as defined in any of claims 1 to 6, wherein:
a upper part of a cross-section of a periphery of said slit is rounded.

8. The tension member-holder as defined in any of claims 1 to 6, wherein: a upper part of a cross-section of a periphery of said slit is tapered.
